# FASCICULE DE BREVET EUROPEEN

(11) **EP 3 292 324 B1**
(45) Date de publication et mention de la délivrance du brevet: **13.03.2019**
(21) Numéro de dépôt: 16727742.5
(22) Date de dépôt: 04.05.2016
(51) Int. Cl.: F16H 61/4148, B60K 23/08, F16H 61/4078, F16H 61/423, B60K 7/00, B60K 17/10, B60K 17/356

(54) **SYSTÈME D'ASSISTANCE HYDRAULIQUE POUR ENGINS MOTORISÉS À CIRCUIT OUVERT**
HYDRAULISCHES HILFSSYSTEM FÜR KRAFTFAHRZEUGE MIT OFFENEM KREISLAUF
HYDRAULIC-ASSISTANCE SYSTEM FOR OPEN-CIRCUIT MOTOR VEHICLES

(30) Priorité: 05.05.2015 FR 1554012
(43) Date de publication de la demande: 14.03.2018
(73) Titulaire: Poclain Hydraulics Industrie, 60410 Verberie (FR)
(72) Inventeur: PRIGENT, André, 60410 Verberie (FR); D'HERSIGNERIE, Cyrille, 60410 Verberie (FR)
(74) Mandataire: Regimbeau
(86) Numéro de dépôt international: PCT/FR2016/000085
(87) Numéro de publication internationale: WO 2016/177944

(56) Documents cités:
- EP-A1- 0 131 505
- BE-A1- 901 116
- FR-A1- 2 958 886
- FR-A1- 2 996 176
- US-A- 4 991 672
- US-A- 5 062 265
- US-B1- 6 389 809

## Description

Système d'assistance hydraulique pour engins motorisés à circuit ouvert.

La présente invention concerne le domaine des assistances hydrauliques pour des engins motorisés.

Différents types d'assistance hydraulique ont déjà été proposés.

On connait en particulier des assistances hydrauliques comprenant un moteur thermique et une pompe à cylindrée variable entrainée par le moteur thermique et qui alimente au moins un moteur hydraulique associé à une roue ou un essieu, par l'intermédiaire d'un circuit fermé.

On connait également des assistances hydrauliques qui comprennent une pompe à cylindrée fixe montée sur le secondaire d'une boîte associée à un moteur thermique et qui alimente au moins un moteur hydraulique associé à une roue ou un essieu, par l'intermédiaire d'un circuit fermé.

On a décrit par exemple dans le document FR 2 996 176 une assistance hydraulique du type illustré sur la figure 1 annexée.

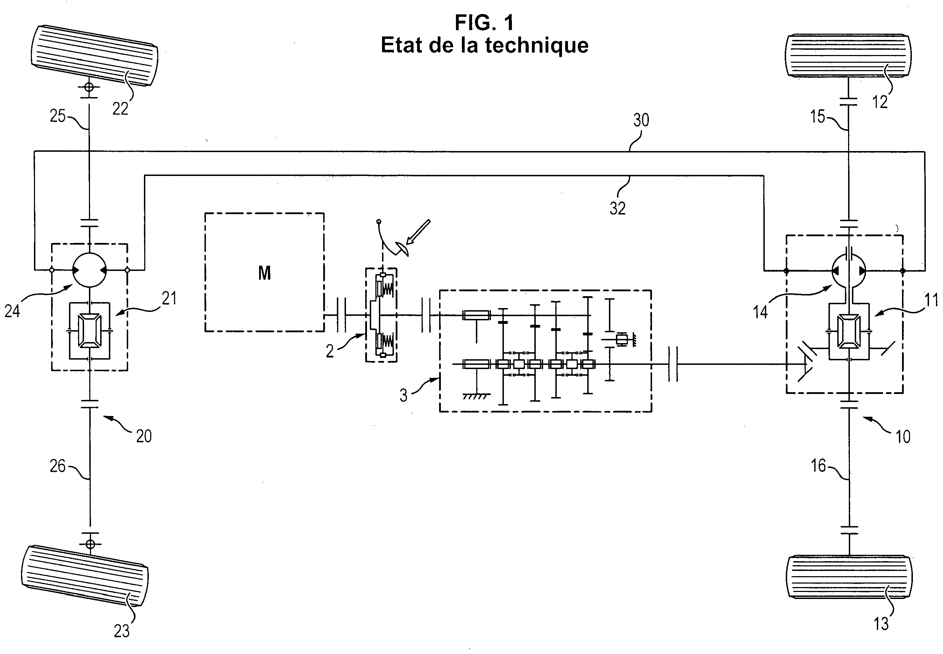

On aperçoit sur cette figure 1 annexée un véhicule comprenant un essieu menant 10 lié à un moteur thermique primaire M par l'intermédiaire d'un embrayage 2 et d'une boite de vitesses 3. L'essieu menant 10 est divisé par un différentiel 11 en deux demi-essieux 15 et 16 sur lesquels sont respectivement montées des roues 12 et 13. Un essieu mené 20 est également divisé en deux demi-essieux 25, 26 sur lesquels sont respectivement montées des roues 22 et 23, par un différentiel 21. Chacun des essieux 10, 20 est équipé d'un appareil hydraulique 14, 24. Les deux appareils hydrauliques 14, 24 sont liés par des conduits hydrauliques 30, 32 tels que lorsque l'appareil hydraulique 14 fonctionne en pompe et génère un débit, il alimente le deuxième appareil hydraulique 24 qui fonctionne alors en moteur, et inversement.

A cette fin, le refoulement de la première machine 14 est relié à l'admission de la deuxième machine 24 par la ligne 30 dite haute pression et le refoulement de la deuxième machine 24 est relié à l'admission de la première machine 14 par la ligne 32 dite basse pression.

Les assistances du type précité s'avèrent prometteuses. Elles présentent cependant différentes contraintes.

Par exemple une pompe de gavage est requise pour faire fonctionner la pompe en circuit fermé. Par ailleurs pour mettre en service et respectivement désactiver les moteurs, il faut « ouvrir » temporairement la boucle fermée : donc une valve ayant cette fonction d'ouverture est absolument requise.

On connaît à ce titre le document BE 901 116 A1, qui dévoile un système d'assistance hydraulique pour engin motorisé, comprenant un moteur primaire relié à une pompe, elle-même reliée, via un circuit ouvert, à un moteur équipé d'un système de décrabotage. La pompe décrite est caractérisée en ce qu'elle adapte son débit de sortie afin de maintenir, en permanence, une pression constante dans le circuit. Cette pression, déterminée par l'opérateur, est maintenue grâce à un limiteur de pression qui assure la sécurité du circuit. Ceci permet de supprimer toute pompe de gavage, ainsi que le besoin d'ouvrir le circuit de liaison pour décraboter, puisque le circuit est toujours ouvert. Cependant, un tel système s'avère peu flexible et limité dans le spectre des pressions balayées.

La présente invention a maintenant pour but de proposer de nouveaux moyens d'assistance permettant un meilleur contrôle de la pression dans le circuit et une large gamme de couples autorisés sur le moteur.

Ce but est atteint dans le cadre de la présente invention grâce à un système d'assistance hydraulique pour engin motorisé, comprenant un moteur primaire et deux machines hydrauliques reliées par un circuit hydraulique de telle sorte que lorsqu'une première machine hydraulique fonctionne en pompe, la deuxième machine hydraulique fonctionne en moteur, caractérisé en ce que le circuit hydraulique reliant les deux machines est un circuit ouvert passant par un réservoir, la machine hydraulique formant moteur est une machine décrabotable, et la machine hydraulique fonctionnant en pompe est une pompe à cylindrée variable dont la cylindrée variable est pilotée en pression au moyen d'un dispositif comprenant un limiteur de pression à tarage proportionnel, placé entre une ligne de drain et la ligne de refoulement de la machine hydraulique fonctionnant en pompe, et permettant le tarage de la pression d'assistance, et au moins un gicleur de prélèvement intercalé entre le limiteur de pression à tarage proportionnel et la ligne de refoulement de la machine hydraulique, la pression de consigne assurant le pilotage de la machine hydraulique qui fonctionne en pompe étant prélevée entre le limiteur de pression et le gicleur de prélèvement.

Comme on le comprendra à l'examen de ce qui va suivre, la pression dans le circuit est en permanence contrôlée via un circuit à rétroaction en boucle fermée, de pilotage de la cylindrée de la pompe. C'est le branchement même de ce circuit d'asservissement, au sein du circuit global, qui autorise la flexibilité et la gamme de pression permise par l'invention décrite dans cette demande.

Selon d'autres caractéristiques avantageuses de l'invention :
- le système comprend :
   - deux vérins antagonistes, qui agissent sur un plateau-came oscillant pour régler l'inclinaison du plateau et ce faisant de la course de pistons de pompage, l'un des vérins étant alimenté par la pression en sortie de pompe, et
   - un module de pilotage qui alimente l'autre vérin, selon la valeur de la pression de consigne prélevée entre le limiteur de pression et le gicleur de prélèvement, à partir d'une pression de réservoir pour augmenter la cylindrée ou à partir de la pression de sortie de pompe pour diminuer la cylindrée, afin de maintenir une pression de sortie de pompe égale à la consigne.
- le module de pilotage comprend un distributeur formant tiroir d'annulation de cylindrée adapté pour appliquer sur ledit autre vérin alternativement la pression de réservoir lorsque la pression de consigne n'est pas atteinte (c'est-à-dire lorsque la pression de sortie de pompe est inférieure à la pression de consigne) et la pression de sortie de pompe lorsque la pression de consigne est dépassée (c'est-à-dire lorsque la pression de sortie de pompe est supérieure à la pression de consigne).
- le module de pilotage comprend un distributeur formant limiteur de pression, taré par la pression en sortie de pompe d'un côté et par un ressort antagoniste de l'autre côté et adapté pour appliquer la pression de sortie de pompe sur ledit autre vérin, lorsque la pression de sortie de pompe dépasse une valeur maximale, afin de diminuer la cylindrée de la pompe. Le but de l'invention est également atteint par un procédé selon la revendication 14.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 précédemment décrite représente un circuit d'assistance du type conforme à l'état de la technique décrit dans le document FR-2996176,
- la figure 2 représente le schéma d'un système hydraulique conforme à la présente invention,
- la figure 3 représente le schéma d'une valve d'assistance conforme à la présente invention,
- la figure 4 représente le schéma du circuit de pilotage de la pompe à cylindrée variable conforme à la présente invention, plus précisément la figure 4a représente ce circuit de pilotage dans un premier état, la figure 4b représente le même circuit de pilotage dans un deuxième état et la figure 4c représente le circuit de pilotage dans un troisième état,
- la figure 5 représente la configuration du système conforme à la présente invention en mode avancement roue libre sur transmission mécanique uniquement,
- la figure 6 représente la configuration du système conforme à la présente invention en phase de crabotage des moteurs avant,

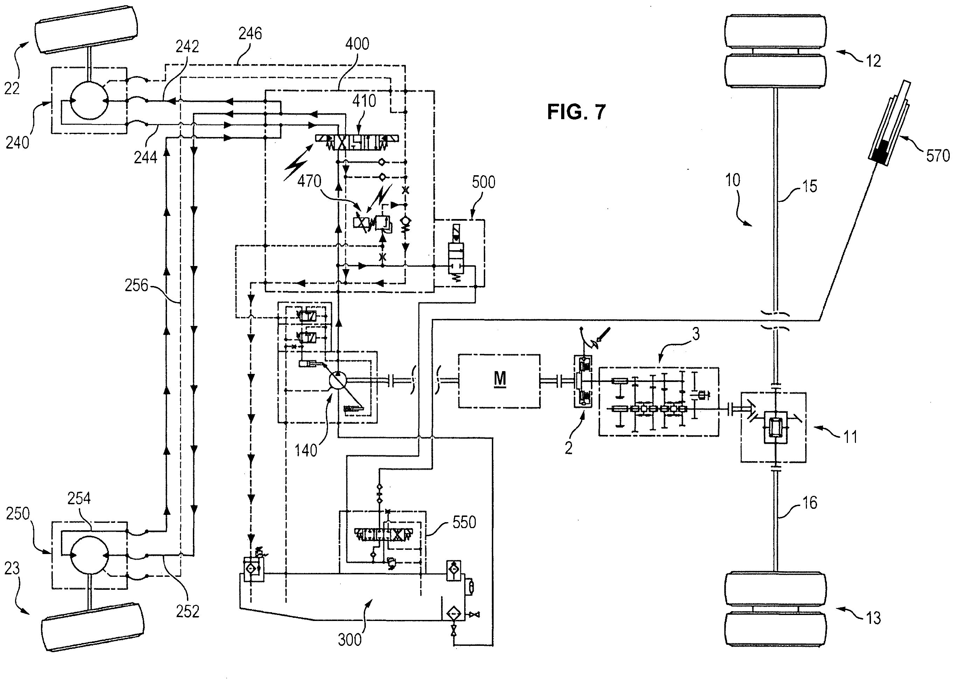

- la figure 7 représente la configuration du système conforme à la présente invention en mode assistance à une pression prédéfinie,
- la figure 8 représente la configuration du système conforme à la présente invention en mode décrabotage des moteurs avant,
- la figure 9 représente la configuration du système conforme à la présente invention en mode sélection levage, et
- la figure 10 représente la configuration du système conforme à la présente invention en mode utilisation d'une benne.

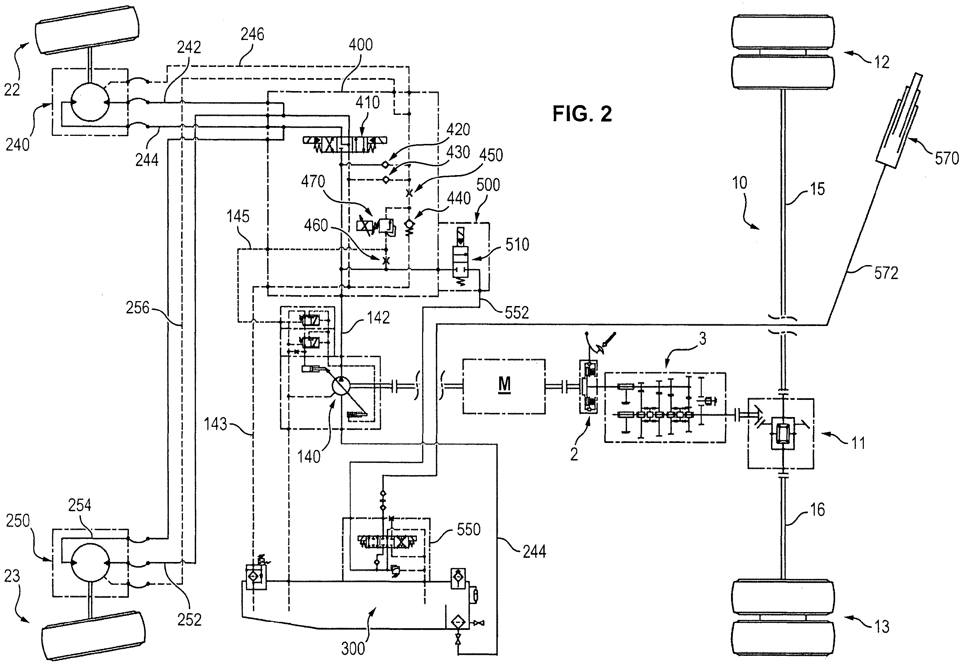

On retrouve sur les figures 2 et suivantes annexées, un système d'assistance comprenant un essieu menant 10 lié à un moteur thermique M par l'intermédiaire d'un embrayage 2 et d'une boîte de vitesse 3. L'essieu menant 10 est divisé par un différentiel 11 en deux demi-essieux 15 et 16 sur lesquels sont respectivement montées des roues 12 et 13, par exemple mais non limitativement des roues jumelées.

Des roues menées 22, 23 sont munies d'une assistance conforme à l'invention. Les roues menées 22, 23 peuvent être portées par un essieu commun séparé en deux demi-essieux par un différentiel comme illustré sur la figure 1.

Cependant, de préférence, comme illustré sur les figures 2 et suivantes annexées les roues 22 et 23 menées sont séparées et associées à des moteurs d'assistance respectifs 240, 250. Une machine hydraulique principale 140 qui fonctionne en pompe en mode de fonctionnement normal en assistance est entraînée par une prise du moteur thermique M.

Les deux moteurs hydrauliques 240 et 250 sont montés en parallèle. Les deux moteurs hydrauliques 240, 250 ont chacun un conduit d'admission 242, 252 et un conduit de refoulement 244, 254.

La machine hydraulique principale 140 formant pompe comprend un conduit de refoulement 142 destiné à être connecté aux lignes d'admission 242, 252 des moteurs 240, 250 et une ligne d'admission 144 qui prélève de l'huile dans un réservoir 300.

La pompe principale 140 est de préférence une pompe à cylindrée variable dont la cylindrée est asservie en pression. Ainsi, la cylindrée de la pompe principale 140 est commandée par rapport à une pression de consigne. Si la pression du circuit est inférieure à la consigne, la cylindrée de la pompe 140 augmente et réciproquement.La pompe principale 140 prenant tout son débit dans la réserve d'huile 300 sans pression, le circuit d'alimentation des moteurs 240, 250 est un circuit ouvert, sans ligne basse pression avec retour direct au réservoir 300.

Le circuit d'assistance illustré sur les figures 2 et suivantes comprend en outre un bloc 400 formant fonction assistance qui permet notamment une position neutre de by pass et une position d'inversion de flux pour le mode en marche arrière. Comme indiqué précédemment, selon l'invention, les moteurs 240, 250 sont du type à crabotage/décrabotage à rétraction des pistons par la pression et/ou par ressort. Concrètement, selon certaines options conformes à la présente invention, la pression dans le carter est supprimée, et seuls les ressorts sont conservés.

Sur les figures annexées, les traits en pointillé qui vont vers le boîtier carter des moteurs 240, 250 représentent des drains reliés au réservoir 300. Ces drains référencés 246, 256 sont adaptés pour récupérer les fuites internes des moteurs 240, 250 et les retourner à la réserve d'huile 300. Dans le cadre de l'invention, ils peuvent être mis en pression pour forcer les pistons des moteurs 240, 250 à quitter leur came respective s'il n'y a pas de pression d'alimentation ou d'échappement. Le cas échéant, les moteurs 240, 250 peuvent également avoir des ressorts de rappel pour maintenir les pistons en position rentrée.

Dans le cadre de l'invention, on peut combiner pression des carters des moteurs 240 et 250 et ressort de rappel pour assurer le décrabotage des moteurs 240 et 250.

En position d'attente, les carters des moteurs 240, 250 sont pressurisés par une pression minimale, ce qui permet de garantir le débrayage des moteurs. On peut par exemple appliquer une pression initiale pour bien remplir le carter pendant un court instant de l'ordre de la seconde, puis ensuite supprimer cette pression et ne compter que sur les ressorts pour maintenir les pistons en position décrabotée tant que le crabotage des moteurs 240, 250 n'est pas demandée par la pression de commande issue de la pompe 140.

L'on aperçoit également sur les figures 2 et suivantes annexées, une valve d'isolation 500 d'un circuit de benne associée à une valve de levage 550 adaptée pour le pilotage d'un vérin simple effet 570.

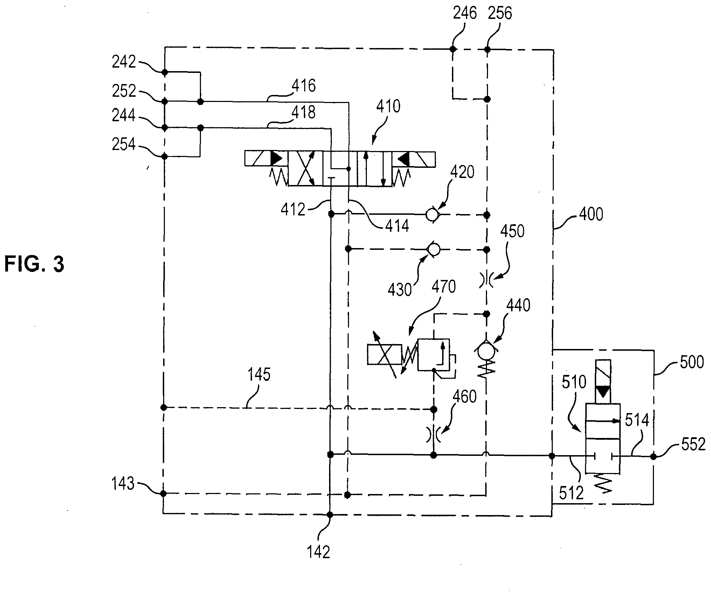

On va maintenant décrire plus en détail la structure de la valve d'assistance 400 représentée sur la figure 3 annexée.

La valve d'assistance 400 comprend principalement un distributeur 410 quatre voies/trois positions, adapté pour permettre de sélectionner entre un sens marche avant, un sens marche arrière et une position roue libre.

Une première entrée 412 du distributeur 410 est reliée à la ligne de refoulement 142 de la pompe principale 140.

Une deuxième entrée 414 du distributeur 410 est reliée à une ligne de drain 143 conduisant au réservoir 300.

Une première sortie 416 du distributeur 410 conduit à l'admission 242, 252 des moteurs 240, 250.

Une deuxième sortie 418 du distributeur 410 conduit aux lignes de refoulement 244, 254 des moteurs 240, 250.

En position neutre telle qu'illustrée sur la figure 2, la première entrée 412 du distributeur 410 reliée à la ligne de refoulement 142 de la pompe 140 est isolée tandis que les deux sorties 416 et 418 du distributeur 410 sont reliées à la deuxième entrée 414 et par conséquent à la ligne de drain 143.

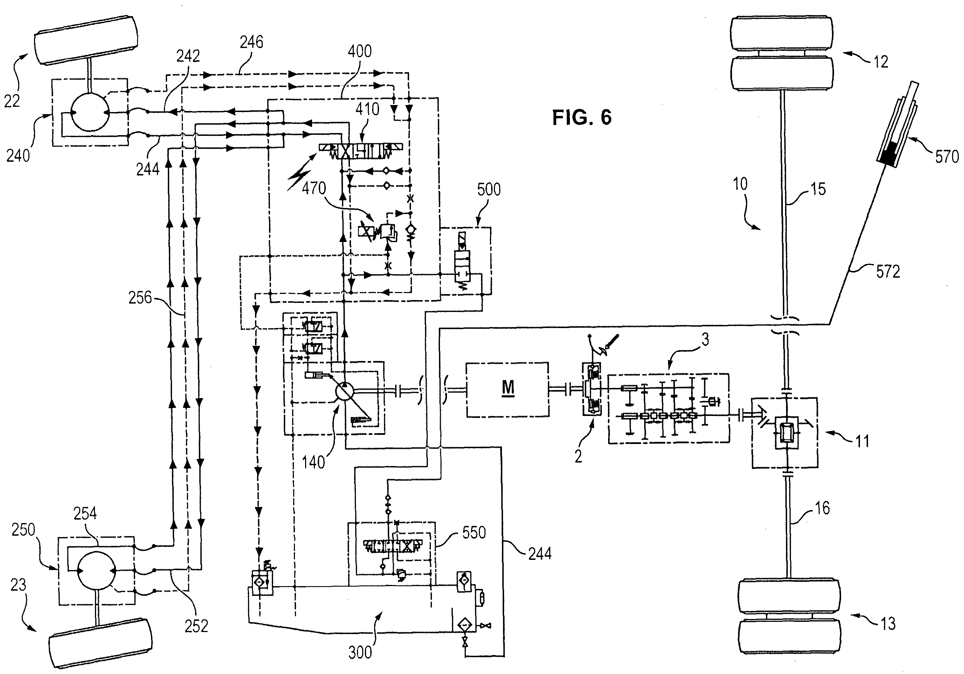

En position de marche avant telle qu'illustrée sur la figure 6, la première entrée 412 du distributeur 410 reliée à la ligne de refoulement 142 de la pompe principale 140 est reliée à la première sortie 416 et par conséquent aux lignes d'admission 242, 252 des pompes 240, 250, tandis que la seconde entrée 414 est reliée à la deuxième sortie 418 et par conséquent aux lignes de refoulement 244, 254 pour conduire celles-ci au réservoir 300 par l'intermédiaire du drain 143.

Inversement, en position de marche arrière du distributeur 410, la première entrée 412 est reliée à la deuxième sortie 418 et par conséquent à la ligne dite précédemment de refoulement 244, 254 des moteurs 240, 250, pour imposer leur rotation en sens inverse de la marche avant, tandis que la deuxième entrée 414 du distributeur 410 est reliée à la première sortie 410 afin de diriger les lignes 242, 252 dénommées précédemment d'alimentation des moteurs 240, 250 vers le réservoir 300 par l'intermédiaire du drain 143.

Un clapet anti-retour 420 est monté entre la ligne de refoulement 142 de la pompe principale 140 et les lignes de drain 246, 256 menant aux moteurs 240, 250. Le clapet anti-retour 420 est monté passant dans le sens drains 246, 256 vers la ligne de refoulement 142 de la pompe principale 140. Le clapet 420 permet de limiter la pression carter des moteurs 240, 250 à la pression d'attente lors de la sortie des pistons.

Un deuxième clapet anti-retour 430 est monté entre la ligne de drain 143 conduisant à la deuxième entrée 414 du distributeur 410 et la ligne de drain 246, 256 menant au carter des moteurs 240, 250. Le clapet anti-retour 430 est monté passant dans le sens de la ligne de drain 143 vers les lignes de drain 246, 256. Le clapet 430 permet de réalimenter le carter des moteurs 240, 250 lors d'un décrabotage.

Une branche reliant le drain 143 conduisant au réservoir 300 et les drains 246, 256 menant aux moteurs 240, 250 comprend en série un clapet de pressurisation 440 et un gicleur 450. Le clapet de pressurisation 440 est placé côté drain 143 conduisant au réservoir 300, tandis que le gicleur 450 est placé côté drains 246, 256.

Le clapet de pressurisation 440 est passant dans le sens des drains 246, 256 vers le drain 143. Ce clapet de pressurisation est taré et adapté pour contrôler la pressurisation du carter en mode roue libre.

Le gicleur 450 intercalé entre le clapet de pressurisation 440 et les lignes de drains 246, 256 menant au moteur 240, 250 est adapté pour autoriser la montée en pression dans le carter des moteurs 240, 250 lors de la sortie des pistons en freinant l'écoulement de l'huile.

La valve d'assistance 400 représentée sur la figure 3 comprend en outre une branche montée en dérivation entre la ligne de refoulement 142 de la pompe principale 140 et le point commun au clapet de pressurisation 440 et au gicleur 450.

Cette branche de dérivation comprend en série un gicleur 460 et un limiteur de pression 470.

Le gicleur 460 est placé côté ligne de refoulement 142 de la pompe principale. Le gicleur de prélèvement 460 est adapté pour permettre de limiter le débit consommé par le circuit de pilotage de l'assistance.

Le limiteur de pression 470 est placé côté lignes de drains 246, 256. Le limiteur de pression 470 est adapté pour limiter la pression à un tarage proportionnel permettant le réglage de la pression d'assistance.

Le point milieu de cette branche de dérivation commun au limiteur de pression 470 et un gicleur 460 conduit à une ligne 145 de consigne de pression qui assure le pilotage de la pompe principale 140.

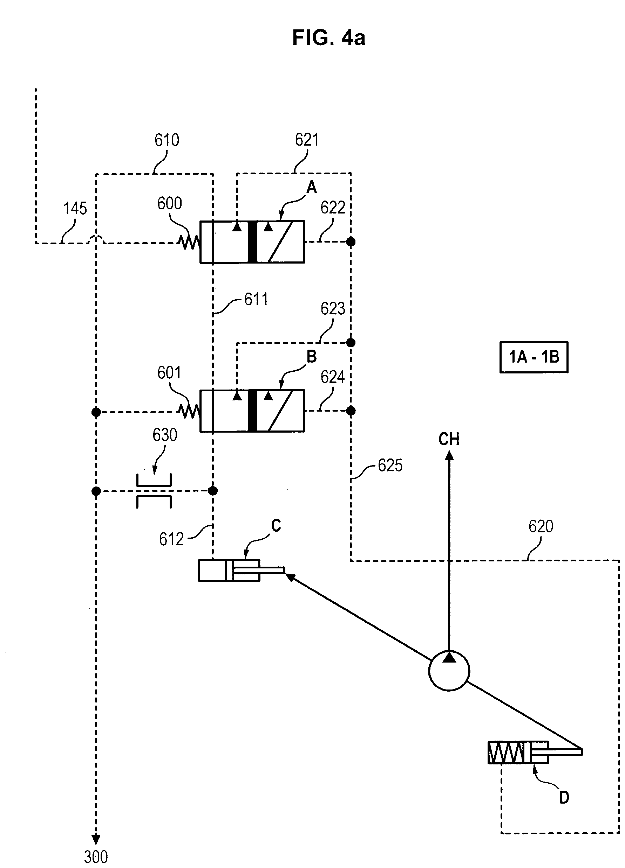

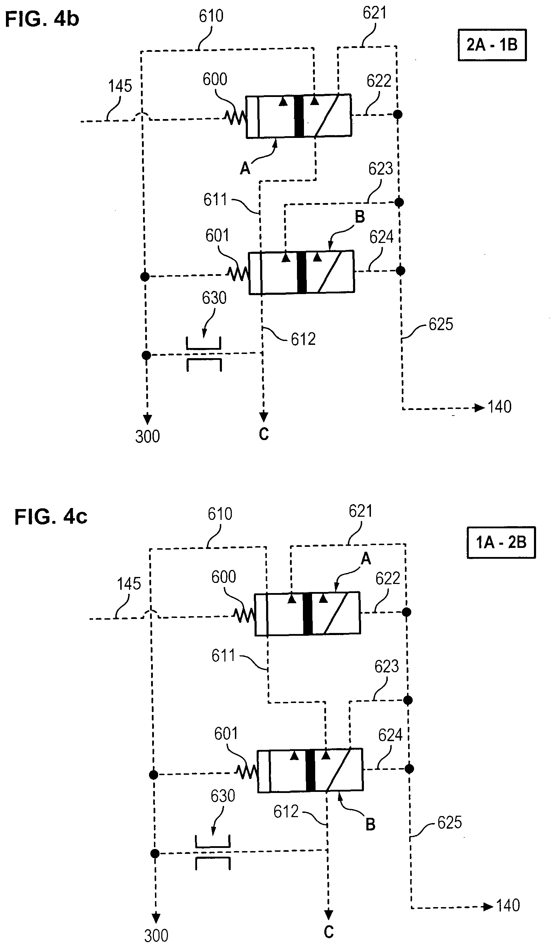

On va maintenant décrire plus en détail le dispositif d'asservissement en pression permettant le pilotage de la pompe principale 140 présenté sur la figure 4 annexée.

La cylindrée de la pompe 140 est régulée par l'action des vérins ou servo-pistons C et D, qui agissent de façon connue en soi sur un plateau-came oscillant pour régler l'inclinaison du plateau et ce faisant de la course des pistons de pompage. Un ressort 602 de mise en cylindrée est placé au niveau du vérin D, dans la chambre de pression de ce vérin D, pour placer la pompe en position de pleine cylindrée en l'absence de pression dans les vérins. Cette position est la position de départ de la pompe lors de sa mise en route. A la mise en route la pompe débite donc et des pressions s'établissent, ce qui permet au système de pilotage de la pompe de se mettre en fonction. La poussée de ce ressort 602 est ensuite incorporée à la poussée totale du vérin D dans la suite de la description. Le vérin D est alimenté par la pression en sortie de pompe 140 via la ligne 620. Le vérin antagoniste C est alimenté par les distributeurs A et B via une ligne 612. A et B sont des distributeurs trois voies (deux voies d'entrée et une voie de sortie), deux positions. A et B raccordent le vérin C, dit de mise en cylindrée, soit à la pression de sortie de pompe 140, soit à la ligne 610, dite sans pression, raccordée au réservoir 300. La cylindrée de la pompe dépend donc de l'équilibre de pression qui alimente les vérins C et D.

Les vérins C et D sont dimensionnés de sorte que en cas d'égalité des pressions appliquées à ces deux vérins, le vérin C exerce un effort supérieur au vérin D et diminue la cylindrée de la pompe. Tant que la pression d'alimentation de D est sensiblement supérieure à la pression d'alimentation de C, la cylindrée de la pompe augmentera, et avec lui la pression en sortie de pompe.

Le distributeur A a une première entrée reliée à la ligne 610 raccordée au réservoir 300 et une deuxième entrée reliée à la ligne 621 raccordée à la sortie de pompe 140. Sa sortie est reliée à une première entrée du distributeur B.

Le distributeur B a une deuxième entrée reliée à la ligne 623 raccordée à la sortie de pompe 140. Sa sortie est reliée au vérin C via la ligne 612.

La position de A est pilotée d'un côté par la pression de sortie de pompe via la ligne 625, puis 622, et de l'autre par un ressort de tarage 600 et la ligne de consigne 145. Tant que l'action du ressort 600 combinée à la pression délivrée par la ligne 145 est supérieure à l'action de la pression délivrée par la ligne 622, le distributeur A relie la ligne 610 à la ligne 611 qui constitue une des voies d'entrée de B (position 1A). Dès que la pression délivrée par la ligne 622 (*ie*. pression en sortie de pompe 140) devient supérieure à l'action du ressort 600 et de la pression délivrée par la ligne 145, le distributeur A passe dans sa seconde position et relie la ligne 611 à la ligne 621 reliée, via 625, à la pression en sortie de pompe 140 (position 2A). Le distributeur A régule la cylindrée de pompe en fonction de la pression dans la ligne 145, le distributeur A étant flottant entre les états 1A et 2A, c'est-à-dire en équilibre flottant entre la pression de la ligne 145 et la ligne 622.

La position de B est pilotée d'un côté par la pression de sortie de pompe via la ligne 625, puis 624, et de l'autre par un ressort de tarage 601. Tant que l'action du ressort 601 est supérieure à l'action de la pression délivrée par la ligne 624, le distributeur B relie la ligne 611 à la ligne 612 qui pilote l'action du vérin C (position 1B). Dès que la pression délivrée par la ligne 624 (*ie*. pression en sortie de pompe 140) devient supérieure à l'action du ressort 601, le distributeur B passe dans sa seconde position et relie la ligne 612 à la ligne 623 reliée, via 625, à la pression en sortie de pompe 140 (position 2B). Le distributeur B limite la cylindrée de la pompe pour ne pas dépasser une pression maximale déterminée par le ressort 601. C'est un équipement de sécurité.

Quand A est en position 1A, et B en position 1B, le vérin C est alimenté à la pression du réservoir 300. Quand A est en position 2A et B en position 1B, le vérin C est alimenté à la pression de sortie de pompe 140. Quand A est en position 1A et B en position 2B, le vérin C est alimenté à la pression de sortie de pompe 140. Comme on le comprendra, le cas 2A-2B est pratiquement impossible à atteindre dans un fonctionnement normal de l'équipement.

Le distributeur A est un tiroir d'annulation de cylindrée.

Dans le fonctionnement initial de la pompe (mise en route), le dispositif se trouve dans l'état 1A-1B, et la pompe est mise en cylindrée par le ressort 602 de mise en cylindrée incorporé au niveau du vérin D. Le vérin C reçoit la pression de la ligne 610 via les 2 tiroirs A et B. En effet, la pression dans la ligne 145 est nulle (470 ouvert), et le ressort de tarage 600 sert à mettre le distributeur A dans la position par défaut qui correspond à la mise en cylindrée jusqu'à sa pression minimale de fonctionnement, typiquement autour de 20 bars. Dès cette pression atteinte, le dispositif bascule dans l'état 2A-1B. Le vérin D reçoit directement la pression de sortie de pompe via la ligne 620. Le vérin C reçoit alors la pression de sortie de pompe 140, via les 2 tiroirs A et B. Le distributeur A est flottant comme indiqué précédemment et: la pompe est régulée à pression constante. Pour obtenir une autre pression, il suffit de faire varier la valeur de tarage du limiteur 470 pour ajouter au tarage initial du ressort 600. On crée ainsi une pression intermédiaire entre la pression en amont de 460 et en aval de 470. Cette surpression est transmise, via la ligne 145, au distributeur A qui bascule en position 1A, reliant ainsi C à la pression du réservoir 300, et autorisant en conséquence une augmentation de la cylindrée de la pompe 140 jusqu'à ce que la pression en sa sortie soit suffisante pour contrebalancer la surpression induite par 145. A rebascule en position 2A. La pompe se maintient à la pression de consigne souhaitée, le distributeur A étant flottant entre les états 1A et 2A, c'est-à-dire en équilibre flottant entre la pression de la ligne 145 et la ligne 622.

Le tiroir A pilote donc la pompe 140 pour une pression définie par le ressort 600, typiquement de 20 bars, si la pression dans la ligne 145 est nulle (470 ouvert), et pour une pression égale à 20 bars plus la pression qui s'établit en aval du gicleur 460, si on ferme la valve 470.

Entre le gicleur 460 alimenté par la pression de pompe en amont, et la valve 470 qui peut évacuer du fluide vers le réservoir d'huile sans pression 300, on crée un « pont de gicleur », c'est-à-dire qu'une pression intermédiaire entre la pression en amont du gicleur 460 et la pression en aval de la valve 470 va s'établir.

Donc le tiroir A est poussé par un ressort 600 de 20 bars. Quand la pression de sortie de la pompe 140 atteint 20 bars, le tiroir A se met en équilibre et la pompe 140 fluctue autour de la position atteinte.

Si on rajoute une pression intermédiaire prélevée entre le gicleur 460 et la valve 470, l'équilibre est rompu et le tiroir A est forcé en position 1A pour augmenter la pompe 140 en cylindrée. L'équilibre est atteint quand la pression de la pompe 140 atteint la pression intermédiaire prélevée entre le gicleur 460 et la valve 470, plus l'effort de tarage du ressort 600, soit typiquement 20 bars.

Inversement si on réduit la pression intermédiaire prélevée entre le gicleur 460 et la valve 470 par action sur la valve 470, l'équilibre est aussi rompu et le tiroir A est forcé en position 2A pour diminuer la cylindrée de la pompe 140. L'équilibre est à nouveau atteint quand la pression de la pompe 140 atteint la nouvelle pression dans la ligne 145, le distributeur A étant flottant entre les états 1A et 2A, c'est-à-dire en équilibre flottant entre la pression de la ligne 145 et la ligne 622.

La réduction de cylindrée est donc obtenue si la pression en sortie de pompe est supérieure a la pression de consigne donnée par la ligne 145, par le fait que le tiroir A va se déplacer dans le sens de faire augmenter la pression dans le vérin C. Si la pression dans la ligne 145 diminue jusqu'à zéro, la valve A va rester en équilibre pour réguler autour d'une pression de 20 Bar.

Le distributeur B est également un tiroir d'annulation de cylindrée. Il agit en limiteur de pression. Il est taré par la pression en sortie de pompe 140 d'un côté et par un ressort antagoniste 601 de l'autre côté. Il fait diminuer la cylindrée de la pompe 140 si cette pression atteint une valeur limite, par exemple 350 bars. En effet, le ressort 601 est taré de sorte à ce que lorsque la pression de sortie de pompe 140 dépasse une valeur maximale, typiquement 350 bars, B passe en position 2B, mettant ainsi en relation la ligne 612 à la ligne 623 et, par-là, à la pression de sortie de pompe 140, via la ligne 625. Le vérin C est alors alimenté par la pression en sortie de pompe 140, à égalité avec la pression d'alimentation du vérin D, ce qui entraine la diminution de cylindrée de la pompe 140.

Ainsi, en faisant varier la valeur de la restriction 470, on peut faire évoluer la pression dans la ligne 145, et donc modifier le pilotage vers une nouvelle valeur de consigne de pression. La pompe 140, essentiellement par l'intermédiaire du tiroir A, et des vérins C et D, va s'autopiloter en cylindrée, quel que soit le débit consommé, pour atteindre en permanence la pression correspondant à la pression de la ligne 145 à laquelle s'ajoute la pression minimale de mise en cylindrée définie par le ressort 600, typiquement 20 bars.

Par le pilotage de la valve 470, on agit donc via le pilotage de la cylindrée de la pompe, sur la pression de consigne sur laquelle se régule la pompe 140.

La pression du circuit est proportionnelle au couple délivré par les moteurs hydrauliques 240 et 250. On peut ainsi piloter le couple par commande de la pression dans le circuit grâce à l'élément 470.

On note que 470 peut être à tarage proportionnel, comme précédemment décrit, de façon à obtenir n'importe quelle pression souhaitée en sortie de pompe, mais aussi n'être qu'une valve à deux états. Par exemple, 470 peut être une valve proportionnelle à commande électrique, normalement ouverte si on souhaite neutraliser l'assistance en cas de panne électrique, ou normalement fermée si on souhaite avoir l'assistance maximum en cas de panne électrique.

On aperçoit également sur les figures 4 annexées une restriction 630 placée entre la ligne 612 reliant le distributeur B au vérin C et la ligne 610 qui communique avec le réservoir 300. De façon connue en soi, cette restriction 630 créée une ligne de fuite vers le réservoir qui sert d'amortissement lors de la commutation de la commande du vérin C, et évite des fluctuation causées par les commutations des tiroirs A et B.

On aperçoit enfin sur la figure 3, la valve 500 d'isolation d'un circuit de levage. Cette valve 500 comprend un distributeur 510 deux voies, deux positions. L'entrée 512 du distributeur 510 est reliée à la ligne de refoulement 142 de la pompe principale 140. La sortie 514 du distributeur 510 est reliée à une ligne 552 d'alimentation à valve de levage 550.

En position de repos, la sortie 552 est isolée de l'entrée 512.

En position de travail, la sortie 552 est reliée à l'entrée 512.

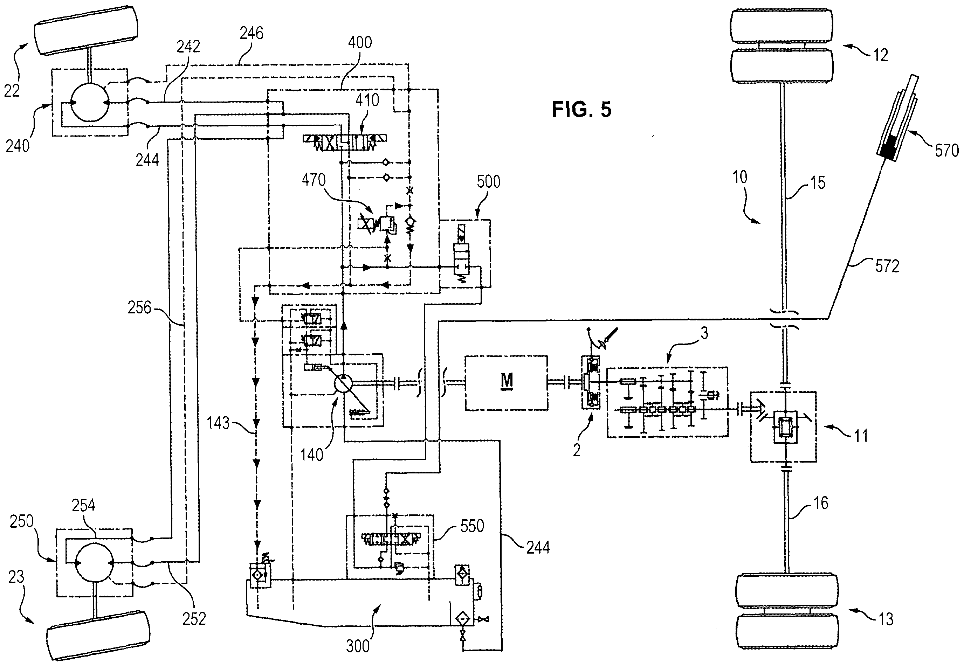

En mode roue libre comme illustré sur la figure 5, les lignes d'alimentation 242, 252 des moteurs 240, 250 sont reliées avec le réservoir 300 par le distributeur 410. La pompe principale 140 est en attente à une valeur de pression dépendante du tarage du ressort du compensateur 470.

Un débit est prélevé par le gicleur 460 afin d'assurer la pressurisation du carter, le niveau de pression du carter étant limité à la valeur de tarage du clapet de protection 440.

Lorsque l'assistance est demandée, pour assurer le crabotage des moteurs 240, 250, le distributeur 410 est piloté comme illustré sur la figure 6 afin de sélectionner le mode marche avant.

Les lignes d'alimentation 242, 252 des moteurs 240, 250 sont alors reliées à la ligne de refoulement 142 de la pompe principale, tandis que les lignes de refoulement 244, 254 des moteurs sont reliées à la ligne de drain 143 qui conduit au réservoir 300.

Les pistons connectés à la ligne d'alimentation 242, 252 sont donc extraits des blocs cylindres. La pression carter est limitée à la valeur de consigne de la pompe principale 140 lors de la sortie des pistons puis retrouve son niveau de pression défini par le clapet de protection 440.

Le système ne fournit pas de couple et la pompe 140 est en attente à la valeur de tarage du ressort du compensateur 470.

En opérant le tarage du limiteur de pression électroproportionnel 470, l'opérateur augmente la valeur de tarage du signal de consigne appliquée sur la ligne 145 pour piloter la pompe principale 140. La pompe principale 140 se cale ainsi en cylindrée lorsque la pression de la pompe est égale à la pression requise.

L'assistance est maintenue tant que la pompe 140 est en mesure de fournir du débit.

Le comportement de l'assistance est identique en mode marche arrière, par commutation du distributeur 410 et simple inversion du sens de liaison entre les entrées et sorties du distributeur 410 pour relier cette fois la ligne 244, 254 des moteurs à la ligne de refoulement 142 de la pompe principale et les lignes 242, 252 des moteurs à la ligne de drains 143.

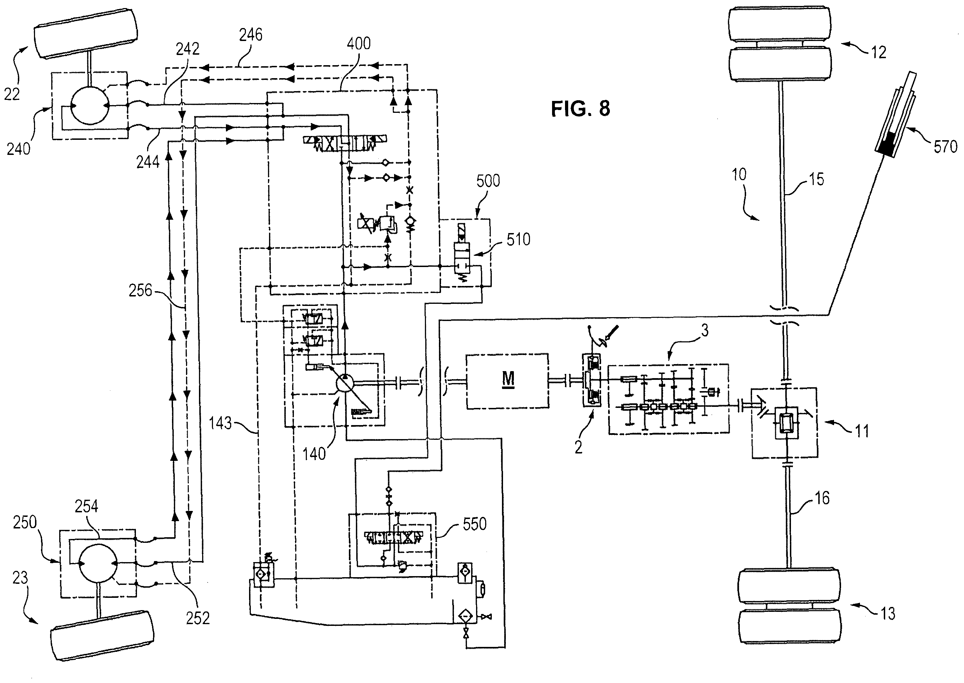

Le décrabotage des moteurs avant 240, 250 est opéré comme illustré sur la figure 8. Pour sortir du mode assistance, il faut dans un premier temps détarer le système en coupant le pilotage du limiteur de pression 470 puis en mettant le distributeur 410 formant sélecteurs marche avant, marche arrière en position neutre comme illustré sur la figure 8.

Les branches de refoulement des moteurs 240, 250 sont alors à nouveau drainées vers le réservoir 300 par la ligne de drain 143. Le clapet 430 de réalimentation des carters permet de compenser le volume d'huile manquant dû à la rentrée des pistons dans leurs alésages.

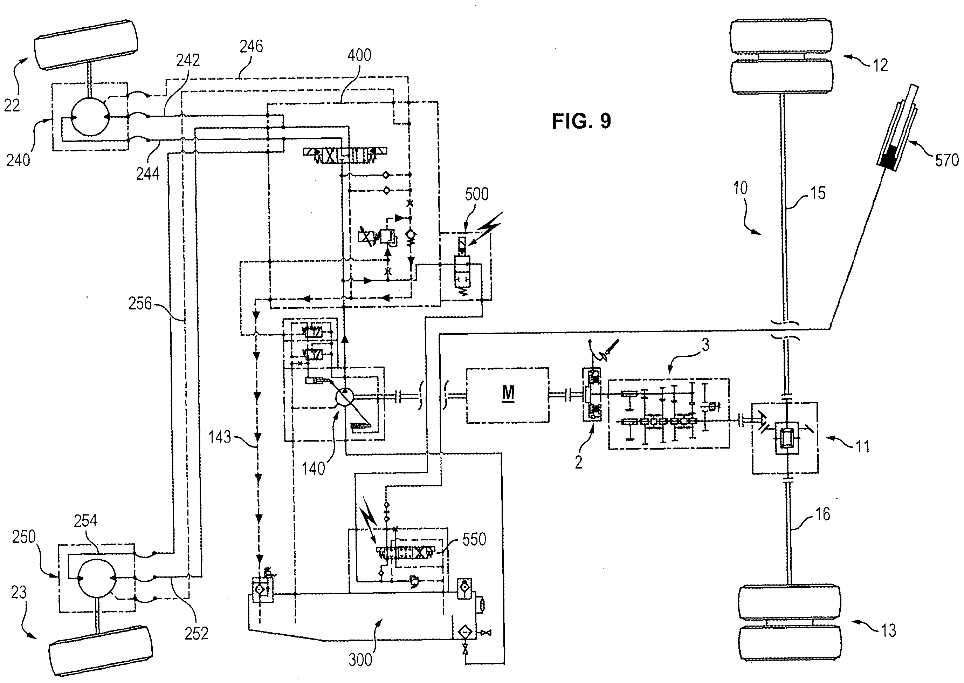

La sélection d'un mode levage est illustrée sur la figure 9. L'utilisation du mode levage s'effectue lorsque le sélecteur d'assistance 410 est en position neutre.

Dans un premier temps, la valve de levage 550 est pilotée suivi du pilotage de la valve d'isolation 500.

La séquence inverse aurait pour effet de mettre la pompe 140 en pleine cylindrée puisque celle-ci débite directement au réservoir 300.

La ligne de levage 572 qui conduit de la valve de levage 550 au vérin 570 est alors pressurisée à la valeur de tarage du compensateur 470.

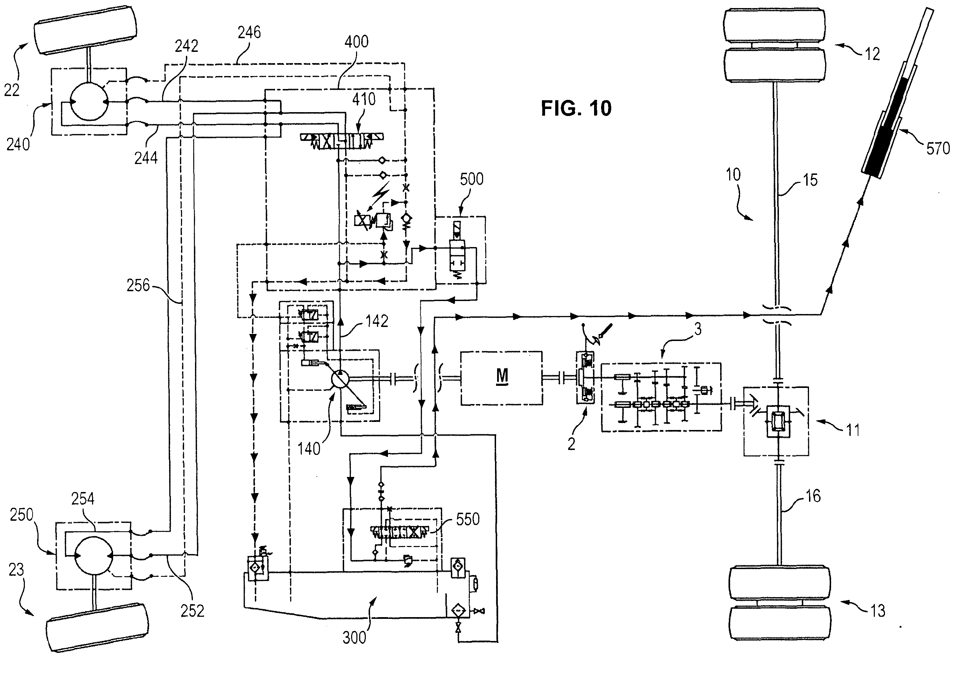

L'utilisation d'une benne actionnée par le vérin 570 est illustrée sur la figure 10. Le tarage progressif du limiteur de pression électroproportionnel 470 comme schématisé sur la figure 10 permet d'actionner le vérin 570 et donc de lever la benne.

Pour maintenir la benne en position il suffit de dépiloter le limiteur proportionnel.

Pour descendre la benne, il suffit de couper l'alimentation de la valve d'isolation 500 et d'inverser le pilotage du sélecteur de levage 550. La benne descend alors sous l'effet de son propre poids.

Sur les figures annexées, les composants activés électriquement portent une indication sous forme d'un logo éclair.

On a décrit précédemment, l'application de la pompe 140 en dérivation vers un vérin 570 destiné à l'actionnement d'une benne. Bien évidemment l'invention peut s'appliquer à toute autre application, telle que l'activation d'une grue ou autre.

Une application principale préférentielle de l'invention peut être l'assistance d'une remorque de camion, pour aller sur un chantier. Il peut s'agir néanmoins également d'un essieu de camion.

La présente invention permet un excellent contrôle de l'assistance en circuit ouvert.

L'invention peut être utilisée notamment pour l'assistance à la traction sur des roues porteuses de camion.

Dans le cas de roues porteuses d'une remorque, l'invention présente l'avantage d'avoir la traction sous les roues qui portent la charge, ce qui est très efficace.

D'autres avantages de l'invention sont les suivants :
- la pompe 140 mise en oeuvre dans le cadre de l'invention est pilotée par un contrôle de pression variable ; une soupape à tarage variable 470 permet de faire varier le couple disponible pour l'assistance ; dans ce contexte on peut par exemple :
   - créer une première phase transitoire dans laquelle la pression est maintenue à un niveau bas, pour sortir les pistons, puis
   - régler ensuite les niveaux de pression du circuit pour ajuster le couple de l'assistance. Ce réglage peut être opéré
      en fonction de la vitesse du moteur thermique M (à bas régime la pression est faible pour éviter le calage) tandis qu'à partir d'un régime jugé suffisant la pression peut être proportionnelle au régime,
      en fonction de la vitesse du véhicule, à priori en pleine pression à basse vitesse et en réduisant cette pression lorsque la vitesse augmente pour respecter une courbe de puissance par exemple,
      ou
      en fonction du couple disponible sur le moteur thermique M (on peut alors partager le disponible théorique en deux parts égales entre l'avant et l'arrière par exemple). A cette fin par exemple une commande au tableau de bord permet d'envoyer une consigne fixe, plus faible, de pression à la pompe en cas de patinage. Le chauffeur peut ainsi conserver une faible assistance quand il sent que le terrain ne permet pas de passer tout le couple (démarrage sur neige par exemple).
- une valve intermédiaire peut être utilisée pour gérer la marche avant/marche arrière,
- une surveillance de la vitesse des roues peut être mise en place pour éviter le patinage. La vitesse peut être prise sur les roues assistées, de sorte que si elles partent en patinage, la pression diminue réduisant la tendance au patinage,
- cette architecture permet de simplifier l'installation et de réduire le contrôle à quelque chose de simple et acceptable,
- un embrayage parait souhaitable pour ne pas faire tourner la pompe 140 en permanence, et
- on peut envisager un tarage de la soupape 470 à zéro pour permettre d'annuler complètement la cylindrée et donc de supprimer l'embrayage.

Bien entendu la présente invention n'est pas limitée au mode de réalisation particulier qui vient d'être décrit, mais s'étend à toute variante conforme aux revendications.

## Revendications

1. Système d'assistance hydraulique pour engins motorisés, comprenant un moteur primaire (M) et deux machines hydrauliques (140 ; 240, 250) reliées par un circuit hydraulique de telle sorte que lorsqu'une première machine hydraulique (140) fonctionne en pompe, la deuxième machine hydraulique (240, 250) fonctionne en moteur, **caractérisé en ce que** le circuit hydraulique reliant les deux machines (140 ; 240, 250) est un circuit ouvert passant par un réservoir (300), la machine hydraulique (240, 250) formant moteur est une machine décrabotable, et la machine hydraulique (140) fonctionnant en pompe est une pompe dont la cylindrée variable est pilotée en pression au moyen d'un dispositif comprenant un limiteur de pression (470) à tarage proportionnel, placé entre une ligne de drain (143) et la ligne de refoulement de la machine hydraulique (140) fonctionnant en pompe, et permettant le tarage de la pression d'assistance, et au moins un gicleur de prélèvement (460) intercalé entre le limiteur de pression à tarage proportionnel (470) et la ligne de refoulement de la machine hydraulique (140), la pression de consigne assurant le pilotage de la machine hydraulique (140) qui fonctionne en pompe étant prélevée entre le limiteur de pression (470) et le gicleur de prélèvement (460).

2. Système selon la revendication 1, **caractérisé par le fait qu'**il comprend :
- deux vérins antagonistes (C , D), qui agissent sur un plateau-came oscillant pour régler l'inclinaison du plateau et ce faisant de la course de pistons de pompage, l'un des vérins (D) étant alimenté par la pression en sortie de pompe (140), et
- un module de pilotage (A, B) qui alimente l'autre vérin (C), selon la valeur de la pression de consigne prélevée entre le limiteur de pression (470) et le gicleur de prélèvement (460), à partir d'une pression de réservoir pour augmenter la cylindrée ou à partir de la pression de sortie de pompe pour diminuer la cylindrée, afin de maintenir une pression de sortie de pompe égale à la consigne.

3. Système selon la revendication 2, **caractérisé par le fait que** le module de pilotage (A, B) comprend un distributeur (A) formant tiroir d'annulation de cylindrée adapté pour appliquer sur ledit autre vérin (C) alternativement la pression de réservoir lorsque la pression de consigne n'est pas atteinte et la pression de sortie de pompe lorsque la pression de consigne est dépassée.

4. Système selon l'une des revendications 2 ou 3, **caractérisé par le fait que** le module de pilotage (A, B) comprend un distributeur (B) formant limiteur de pression, taré par la pression en sortie de pompe (140) d'un côté et par un ressort antagoniste (601) de l'autre côté et adapté pour appliquer la pression de sortie de pompe (140) sur ledit autre vérin (C), lorsque la pression de sortie de pompe (140) dépasse une valeur maximale, afin de diminuer la cylindrée de la pompe (140).

5. Système selon l'une des revendications 1 à 4, **caractérisé par le fait qu'**il comprend deux machines hydrauliques (240, 250) de deuxième type montées en parallèle et associées à des roues respectives (22, 23) fonctionnant en moteur.

6. Système selon l'une des revendications 1 à 5, **caractérisé par le fait qu'**il comprend un distributeur trois positions définissant une position neutre dans laquelle la ligne d'alimentation (242, 252) de chaque machine hydraulique fonctionnant en moteur est drainée au réservoir et deux positions de travail dans lesquelles des lignes d'alimentation (242, 252 ; 244,254) des machines hydrauliques formant moteur sont alimentées par la ligne de refoulement de la machine hydraulique formant pompe tandis que les lignes de refoulement des machines hydrauliques (240, 250) formant moteur sont drainées au réservoir, les deux positions de travail définissant des sens inverses pour une marche avant et une marche arrière.

7. Système selon l'une des revendications 1 à 6, **caractérisé par le fait qu'**il comprend un clapet (420) anti-retour intercalé entre la ligne de refoulement de la machine hydraulique (140) formant pompe et la ligne de drain (143) pour permettre de limiter la pression carter des machines hydrauliques (240, 250) formant moteur à une pression d'attente lors de la sortie des pistons.

8. Système selon l'une des revendications 1 à 7, **caractérisé par le fait qu'**il comprend un clapet anti-retour (430) intercalé entre la ligne de refoulement des machines hydrauliques formant moteurs (240, 250) et une ligne de drain (246, 256) provenant des carters moteurs pour assurer la ré-alimentation du carter lors du décrabotage.

9. Système selon l'une des revendications 1 à 8, **caractérisé par le fait qu'**il comprend un clapet de pressurisation (440) des carters en mode roue libre intercalé entre la ligne de drains (246, 256) provenant des carters des machines hydrauliques (240, 250) formant moteurs et le réservoir (300).

10. Système selon la revendication 9, **caractérisé par le fait qu'**il comprend un gicleur (450) disposé en série du clapet de pressurisation (440) pour autoriser la montée en pression dans le carter de moteur lors de la sortie des pistons.

11. Système selon l'une des revendications 1 à 10, **caractérisé par le fait qu'**il est adapté pour alimenter un accessoire, par exemple un vérin simple effet.

12. Système selon l'une des revendications 1 à 11, **caractérisé par** le qu'il comprend une valve (500) d'isolation du circuit d'alimentation d'accessoire en série d'une valve (550) d'alimentation du circuit d'accessoire.

13. Système selon l'une des revendications 1 à 12, **caractérisé par le fait que** chaque machine hydraulique (240, 250) formant moteur de type machine décrabotable de son carter est formée d'un moteur (240, 250) du type à crabotage/décrabotage à rétraction des pistons par la pression et/ou par ressort.

14. Procédé de pilotage d'assistance hydraulique pour engins motorisés mettant en oeuvre un moteur primaire (M) et au moins deux machines hydrauliques (140 ; 240, 250) reliées par un circuit hydraulique de telle sorte que lorsqu'une première machine hydraulique (140) fonctionne en pompe, la deuxième machine hydraulique (240, 250) fonctionne en moteur, **caractérisé en ce que** le circuit hydraulique reliant les deux machines (140 ; 240, 250) est un circuit ouvert passant par un réservoir (300) et il comprend une étape de pilotage de la cylindrée variable de la pompe (140) et de décrabotage de la machine hydraulique formant moteur (240, 250), à l'aide d'une pression de consigne assurant le pilotage de la machine hydraulique (140) qui fonctionne en pompe, prélevée entre un limiteur de pression (470) à tarage proportionnel, placé entre une ligne de drain (143) et la ligne de refoulement de la machine hydraulique (140) fonctionnant en pompe, et au moins un gicleur de prélèvement (460) intercalé entre le limiteur de pression à tarage proportionnel (470) et la ligne de refoulement de la machine hydraulique (140).

15. Procédé selon la revendication 14, **caractérisé par le fait qu'**il comprend les étapes consistant à :
- créer une première phase transitoire dans laquelle la pression est maintenue à un niveau bas dans les carters des machines hydrauliques (240, 250) formant moteur, pour sortir les pistons, et
- régler ensuite le niveau de pression du circuit pour ajuster le couple de l'assistance en fonction de la vitesse du moteur primaire (M), ou en fonction de la vitesse du véhicule ou en fonction du couple disponible sur le moteur primaire.

## Patentansprüche

1. Hydraulisches Hilfssystem für Kraftfahrzeuge, umfassend einen Primärmotor (M) und zwei hydraulische Maschinen (140; 240, 250), die durch einen hydraulischen Kreislauf derart verbunden sind, dass, wenn eine erste hydraulische Maschine (140) als Pumpe arbeitet, die zweite hydraulische Maschine (240, 250) als Motor arbeitet, **dadurch gekennzeichnet, dass** der hydraulische Kreislauf, der die zwei Maschinen (140; 240, 250) verbindet, ein offener Kreislauf ist, der durch einen Vorratsbehälter (300) verläuft, wobei die hydraulische Maschine (240, 250), die einen Motor bildet, eine klauenauskuppelbare Maschine ist, und die hydraulische Maschine (140), die als Pumpe arbeitet, eine Pumpe ist, deren variabler Hubraum mittels einer Vorrichtung druckgesteuert wird, die einen Druckbegrenzer (470) mit Proportionalkalibrierung umfasst, der zwischen einer Drain-Leitung (143) und der Druckleitung der hydraulischen Maschine (140), die als Pumpe arbeitet, platziert ist und das Kalibrieren des Hilfsdrucks gestattet, und mindestens eine Entnahmedüse (460), angeordnet zwischen dem Druckbegrenzer mit Proportionalkalibrierung (470) und der Druckleitung der hydraulischen Maschine (140), wobei der Solldruck, der das Steuern der hydraulische Maschine (140), die als Pumpe arbeitet, gewährleistet, zwischen dem Druckbegrenzer (470) und der Entnahmedüse (460) abgenommen wird.

2. System nach Anspruch 1, **dadurch gekennzeichnet, dass** es umfasst:
- zwei antagonistische Zylinder (C, D), die auf einer oszillierenden Schrägscheibe agieren, um die Neigung der Scheibe zu regulieren und dadurch des Pumpkolbenhubs, wobei einer der Zylinder (D) von dem Druck am Pumpenausgang (140) versorgt wird, und
- ein Steuerungsmodul (A, B), das den anderen Zylinder (C), gemäß dem Wert des zwischen dem Druckbegrenzer (470) und der Entnahmedüse (460) abgenommenen Solldrucks, auf der Basis eines Vorratsbehälterdrucks versorgt, um den Hubraum zu erhöhen, oder auf der Basis des Pumpenaustrittsdrucks, um den Hubraum zu verringern, um einen Pumpenaustrittsdruck gleich dem Sollwert aufrechtzuerhalten.

3. System nach Anspruch 2, **dadurch gekennzeichnet, dass** das Steuerungsmodul (A, B) einen Verteiler (A) umfasst, der einen Hubraumannullierungsschieber bildet, der geeignet ist, auf den anderen Zylinder (C) den Vorratsbehälterdruck, wenn der Solldruck nicht erreicht ist, und den Pumpenaustrittsdruck, wenn der Solldruck überschritten ist, alternativ anzuwenden.

4. System nach einem der Ansprüche 2 oder 3, **dadurch gekennzeichnet, dass** das Steuerungsmodul (A, B) einen Verteiler (B) umfasst, der einen Druckbegrenzer bildet, der durch den Druck am Pumpenausgang (140) auf der einen Seite und durch eine antagonistische Feder (601) auf der anderen Seite kalibriert und für eine Anwendung des Pumpenaustrittsdrucks (140) auf den anderen Zylinder (C) geeignet ist, wenn der Pumpenaustrittsdruck (140) einen maximalen Wert überschreitet, um den Hubraum der Pumpe (140) zu verringern.

5. System nach einem der Ansprüche 1 bis 4, **dadurch gekennzeichnet, dass** es zwei hydraulische Maschinen (240, 250) zweiten Typs umfasst, die parallel angebracht und jeweiligen Rädern (22, 23), die als Motor arbeiten, zugeordnet sind.

6. System nach einem der Ansprüche 1 bis 5, **dadurch gekennzeichnet, dass** es einen Drei-Positions-Verteiler umfasst, der eine neutrale Position definiert, in der die Versorgungsleitung (242, 252) jeder hydraulischen Maschine, die als Motor arbeitet, zum Vorratsbehälter abläuft, und zwei Arbeitspositionen, in welchen Versorgungsleitungen (242, 252; 244, 254) der hydraulischen Maschinen, die einen Motor bilden, von der Druckleitung der hydraulischen Maschine, die eine Pumpe bildet, versorgt werden, wogegen die Druckleitungen der hydraulischen Maschinen (240, 250), die einen Motor bilden, zum Vorratsbehälter ablaufen, wobei die zwei Arbeitspositionen umgekehrte Richtungen für einen Vorwärtsgang und einen Rückwärtsgang definieren.

7. System nach einem der Ansprüche 1 bis 6, **dadurch gekennzeichnet, dass** es ein Rückschlagventil (420), angeordnet zwischen der Druckleitung der hydraulischen Maschine (140), die eine Pumpe bildet, und der Drain-Leitung (143) umfasst, um die Begrenzung des Gehäusedrucks der hydraulischen Maschinen (240, 250), die einen Motor bilden, während des Austritts der Kolben auf einen Wartedruck zu gestatten.

8. System nach einem der Ansprüche 1 bis 7, **dadurch gekennzeichnet, dass** es ein Rückschlagventil (430), angeordnet zwischen der Druckleitung der hydraulischen Maschinen (240, 250), die Motoren bilden, und einer Drain-Leitung (246, 256), die von den Motorgehäusen kommt, umfasst, um die erneute Versorgung des Gehäuses beim Klauenauskuppeln zu sichern.

9. System nach einem der Ansprüche 1 bis 8, **dadurch gekennzeichnet, dass** es ein Druckbeaufschlagungsventil (440) der Gehäuse im Freilaufmodus, angeordnet zwischen der Drain-Leitung (246, 256), die von den Gehäusen der hydraulischen Maschinen (240, 250) kommt, die Motoren bilden, und dem Vorratsbehälter (300) umfasst.

10. System nach Anspruch 9, **dadurch gekennzeichnet, dass** es eine Düse (450) umfasst, die in Reihe mit dem Druckbeaufschlagungsventil (440) angeordnet ist, um während des Austritts der Kolben den Druckanstieg im Motorgehäuse zu erlauben.

11. System nach einem der Ansprüche 1 bis 10, **dadurch gekennzeichnet, dass** es zur Versorgung eines Zubehörs, beispielsweise eines einfach wirkenden Zylinders, geeignet ist.

12. System nach einem der Ansprüche 1 bis 11, **dadurch gekennzeichnet, dass** es ein Isolierventil (500) des Zubehörversorgungskreislaufs in Reihe mit einem Versorgungsventil (550) des Zubehörkreislaufs umfasst.

13. System nach einem der Ansprüche 1 bis 12, **dadurch gekennzeichnet, dass** jede hydraulische Maschine (240, 250), die einen Motor vom Typ aus ihrem Gehäuse klauenauskuppelbare Maschine bildet, von einem Motor (240, 250) vom Typ Klaueneinkuppeln/Klauenauskuppeln mit Rückzug der Kolben durch Druck und/oder Feder gebildet ist.

14. Verfahren zur hydraulischen Hilfssteuerung für Kraftfahrzeuge, das einen Primärmotor (M) und mindestens zwei hydraulische Maschinen (140; 240, 250) umsetzt, die durch einen hydraulischen Kreislauf derart verbunden sind, dass, wenn eine erste hydraulische Maschine (140) als Pumpe arbeitet, die zweite hydraulische Maschine (240, 250) als Motor arbeitet, **dadurch gekennzeichnet, dass** der hydraulische Kreislauf, der die zwei Maschinen (140; 240, 250) verbindet, ein offener Kreislauf ist, der durch einen Vorratsbehälter (300) verläuft, und es einen Schritt des Steuerns des variablen Hubraums der Pumpe (140) und des Klauenauskuppelns der hydraulischen Maschine (240, 250), die einen Motor bildet, mit Hilfe eines Solldrucks umfasst, der das Steuern der hydraulischen Maschine (140), die als Pumpe arbeitet, gewährleistet, der zwischen einem Druckbegrenzer (470) mit Proportionalkalibrierung, platziert zwischen einer Drain-Leitung (143) und der Druckleitung der hydraulischen Maschine (140), die als Pumpe arbeitet, und mindestens einer Entnahmedüse (460), angeordnet zwischen dem Druckbegrenzer mit Proportionalkalibrierung (470) und der Druckleitung der hydraulischen Maschine (140), abgenommen wird.

15. Verfahren nach Anspruch 14, **dadurch gekennzeichnet, dass** es die Schritte umfasst des:
- Schaffens einer ersten Übergangsphase, in welcher der Druck in den Gehäusen der hydraulischen Maschinen (240, 250), die einen Motor bilden, auf einem niedrigen Niveau gehalten wird, damit die Kolben austreten, und
- danach Einstellens des Druckniveaus des Kreislaufs, um das Hilfsmoment in Abhängigkeit von der Geschwindigkeit des Primärmotors (M) oder in Abhängigkeit von der Geschwindigkeit des Fahrzeugs oder in Abhängigkeit von dem auf dem Primärmotor verfügbaren Moment anzupassen.

## Claims

1. Hydraulic assistance system for motorised vehicles, comprising a primary motor (M) and two hydraulic machines (140; 240, 250) connected by a hydraulic circuit such that when a first hydraulic machine (140) operates as a pump, the second hydraulic machine (240, 250) operates as a motor, **characterised in that** the hydraulic circuit connecting the two machines (140; 240, 250) is an open circuit passing through a reservoir (300), the hydraulic machine (240, 250) operating as a motor is a declutchable machine, and the hydraulic machine (140) operating as a pump is a pump the variable cylinder capacity of which is pressure-controlled by means of a device comprising a proportional pressure limiter (470), placed between a drain line (143) and the discharge line of the hydraulic machine (140) operating as a pump, and enabling the assistance pressure to be set, and at least one collection nozzle (460) inserted between the proportional pressure limiter (470) and the discharge line of the hydraulic machine (140), the setpoint pressure ensuring the controlling of the hydraulic machine (140) which operates as a pump being collected between the pressure limiter (470) and the collection nozzle (460).

2. System according to claim 1, **characterised in that** it comprises:
- two competing cylinders (C, D), which act on an oscillating plate cam to adjust the tilting of the plate and thereby of the course of pumping pistons, one of the cylinders (D) being fed by the pressure exiting the pump (140), and
- a control module (A, B), which feeds the other cylinder (C), according to the value of the setpoint pressure collected between the pressure limiter (470) and the collection nozzle (460), from a reservoir pressure to increase the cylinder capacity or from the pressure exiting the pump to decrease the cylinder capacity, in order to maintain a pressure exiting the pump equal to the setpoint.

3. System according to claim 2, **characterised in that** the control module (A, B) comprises a distributor (A) operating as a compartment for cancelling cylinder capacity adapted to apply on said other cylinder (C) alternatively the reservoir pressure when the setpoint pressure is not reached and the pressure exiting the pump when the setpoint pressure is exceeded.

4. System according to one of claims 2 or 3, **characterised in that** the control module (A, B) comprises a distributor (B) operating as a pressure limiter, set by the pressure exiting the pump (140) on one side and by a competing spring (601) on the other side and adapted to apply the pressure exiting the pump (140) on said other cylinder (C), when the pressure exiting the pump (140) exceeds a maximum value, in order to decrease the cylinder capacity of the pump (140).

5. System according to one of claims 1 to 4, **characterised in that** it comprises two hydraulic machines (240, 250) of a second type mounted in parallel and connected to respective wheels (22, 23) operating as a motor.

6. System according to one of claims 1 to 5, **characterised in that** it comprises a three-position distributor defining a neutral position wherein the feed line (242, 252) of each hydraulic machine operating as a motor is drained to the reservoir and two working positions wherein the feed lines (242, 252; 244, 254) of the hydraulic machines operating as a motor are fed by the discharge line of the hydraulic machine operating as a pump while the discharge lines of the hydraulic machines (240, 250) operating as a motor are drained to the reservoir, the two working positions defining reverse directions for a forward motion and a backward motion.

7. System according to one of claims 1 to 6, **characterised in that** it comprises a one-way valve (420) inserted between the discharge line of the hydraulic machine (140) operating as a pump and the drain line (143) to enable limitation of the case pressure of the hydraulic machines (240, 250) operating as a motor with an expected pressure during the exit of the pistons.

8. System according to one of claims 1 to 7, **characterised in that** it comprises a one-way valve (430) inserted between the discharge line of the hydraulic machines forming motors (240, 250) and a drain line (246, 256) coming from motor cases to ensure the refeeding of the case during the declutching.

9. System according to one of claims 1 to 8, **characterised in that** it comprises a pressurisation valve (440) of the cases in freewheeling mode inserted between the drain line (246, 256) coming from cases of hydraulic machines (240, 250) forming motors and the reservoir (300).

10. System according to claim 9, **characterised in that** it comprises a nozzle (450) disposed in series from the pressurisation valve (440) to enable the increase in pressure in the motor case during the exiting of the pistons.

11. System according to one of claims 1 to 10, **characterised in that** it is adapted to feed an accessory, for example a single effect cylinder.

12. System according to one of claims 1 to 11, **characterised in that** it comprises an isolation valve (500) of the circuit for feeding accessories in series of a valve (550) for feeding the accessory circuit.

13. System according to one of claims 1 to 12, **characterised in that** each hydraulic machine (240, 250) operating as a motor of machine type declutchable from the case thereof is formed of a motor (240, 250) of the clutching/declutching type for retracting pistons by the pressure and/or by spring-loading.

14. Method for controlling hydraulic assistance for motorised vehicles implementing a primary motor (M) and at least two hydraulic machines (140; 240, 250) connected by a hydraulic circuit such that when a first hydraulic machine (140) operates as a pump, the second hydraulic machine (240, 250) operates as a motor, **characterised in that** the hydraulic circuit connecting the two machines (140; 240, 250) is an open circuit passing through a reservoir (300) and it comprises a step of controlling the variable cylinder capacity of the pump (140) and declutching the hydraulic machine operating as a motor (240, 250), using a setpoint pressure ensuring the control of the hydraulic machine (140) which operates as a pump, collected between a proportional pressure limiter (470), placed between a drain line (143) and the discharge line of the hydraulic machine (140) operating as a pump, and at least one collection nozzle (460) inserted between the proportional pressure limiter (470) and the discharge line of the hydraulic machine (140).

15. Method according to claim 14, **characterised in that** it comprises steps consisting of:
- creating a first transitory phase, wherein the pressure is maintained at a low level in the cases of the hydraulic machines (240, 250) operating as a motor, to declutch the pistons, and
- then adjusting the pressure level of the circuit to adjust the torque of the assistance according to the speed of the primary motor (M), or according to the speed of the vehicle or according to the torque available on the primary motor.
